# EUROPÄISCHE PATENTSCHRIFT

(11) **EP 3 714 532 B1**
(45) Veröffentlichungstag und Bekanntmachung des Hinweises auf die Patenterteilung: **18.09.2024**
(21) Anmeldenummer: 18804619.7
(22) Anmeldetag: 19.11.2018
(51) Int. Cl.: H02K 11/225, H02P 6/18, H02P 23/14

(54) **VERFAHREN UND ANORDNUNG ZUM BESTIMMEN VON MINDESTENS EINER EIGENSCHAFT EINER ELEKTRISCHEN MASCHINE**
METHOD AND ARRANGEMENT FOR DETERMINING AT LEAST ONE PROPERTY OF AN ELECTRIC MACHINE
PROCÉDÉ ET ARRANGEMENT POUR DÉTERMINER AU MOINS UNE PROPRIÉTÉ D'UNE MACHINE ÉLECTRIQUE

(30) Priorität: 21.11.2017 DE 102017127467
(43) Veröffentlichungstag der Anmeldung: 30.09.2020
(73) Patentinhaber: Volkswagen Aktiengesellschaft, 38440 Wolfsburg (DE)
(72) Erfinder: BRABETZ, Ludwig, 38165 Lehre (DE); AYEB, Mohamed, 34130 Kassel (DE); BETHKE, Florian, 34119 Kassel (DE); WALDMANN, Thomas, 34119 Kassel (DE)
(86) Internationale Anmeldenummer: PCT/EP2018/081771
(87) Internationale Veröffentlichungsnummer: WO 2019/101688

(56) Entgegenhaltungen:
- DE-A1- 102015 107 666
- JP-A- 2017 028 804
- US-A1- 2007 031 131

## Beschreibung

Die Erfindung betrifft ein Verfahren zum Bestimmen von mindestens einer Eigenschaft, insbesondere eines Betriebsparameters, einer elektrischen Maschine, bei der eine Messspuleneinheit in einem zwischen einem Stator und einem Rotor der elektrischen Maschine liegenden Luftspalt angeordnet ist. Die Erfindung betrifft weiterhin eine Anordnung aus einer elektrischen Maschine mit einer derartigen Messspuleneinheit sowie einer Anordnung zur Auswertung von Signalen der Messspuleneinheit.

Eine elektrische Maschine der genannten Art kann als Generator oder als Elektromotor ausgebildet sein. Bei einer elektrischen Maschine dreht sich ein meist vielpoliger Rotor in einem Magnetfeld eines ebenfalls meist vielpoligen Stators. Die sich dabei gegenüberstehenden Polflächen von Rotor und Stator sind bei Ihrer Bewegung zueinander durch einen Luftspalt voneinander getrennt. Dabei kann die elektrische Maschine sowohl als Außenläufer aufgebaut sein, bei der der Stator innen liegt und von dem Rotor umgeben ist, oder als Innenläufer, bei dem der Rotor innen liegt und von einem außen liegenden Stator umgeben ist.

In elektrischen Maschinen mit hohem Wirkungsgrad und hoher spezifischer Leistung, wie sie in industriellen und zunehmend auch mobilen Anwendungen eingesetzt werden, sind üblicherweise Messaufnehmer (Sensoren) vorgesehen, die zu Überwachungszwecken (Monitoring) und zu Regelungszwecken eingesetzt werden. Dabei werden Sensoren zur Messung verschiedenster Betriebsparameter eingesetzt.

Besonders relevant für eine Regelung der elektrischen Maschine ist der sogenannte Polradwinkel, der den Winkel zwischen einem Drehwinkel des Rotors und der Ausrichtung des sich im Luftspalt ergebenden Magnetfelds aus der Überlagerung des vom Rotor erzeugten Magnetfelds (Rotorfeld) und des vom Stator erzeugten Magnetfelds (Statorfeld) angibt. Um den Polradwinkel zu bestimmen, werden beispielsweise die Rotorposition und die Phasenlage von Strömen in Wicklungen des Stators gemessen. Zur Messung der Rotorposition sind verschiedene Verfahren etabliert, zum Beispiel werden optische oder auf dem Hall-Effekt basierende Positionssensoren eingesetzt, die außerhalb des Motors angeordnet sind und einen Drehwinkel des Rotors gegenüber dem Stator an der Rotorachse messen. Solche Positionssensoren arbeiten häufig digital und liefern Positionsinformationen inkrementell oder absolut. Daneben sind auch analog arbeitende magnetische oder elektromagnetische externe Sensoren bekannt.

Sensoren, die vornehmlich zum Zwecke des Monitorings eingesetzt werden, dienen vor allen Dingen dazu, kritische Zustände der Maschine rechtzeitig zu erkennen, um vor diesen kritischen Zuständen zu warnen bzw. um gegensteuern zu können. Neben einer Messung von mechanischen Parametern wie Vibrationen ist hier insbesondere eine Temperaturmessung relevant. Ein Übersteigen von Grenztemperaturen kann zu Funktionseinbußen und sogar nicht reversiblen Schäden von empfindlichen Komponenten der elektrischen Maschine (Isolationen, Kleber, Magnete usw.) führen. Zur Messung von Temperaturen werden beispielsweise ohmsche Temperaturfühler eingesetzt oder Halbleitersensoren, Quarze oder Strahlungssensoren.

Weiterhin ist es bekannt, indirekt auf eine Temperatur zu schließen, beispielsweise durch Vermessung von temperaturabhängenden Eigenschaften von Materialien, z.B. der Remanenzflussdichte von Magneten oder der relativen Dielektrizität, gemessen auf der Basis von magnetischen oder kapazitiven Messverfahren. Besonders schwierig gestaltet sich dabei die Vermessung der Rotortemperatur. In Laboranlagen oder in großen elektrischen Maschinen werden hierzu aufwendige funkbasierte Messsysteme verwendet oder es wird nur die Oberflächentemperatur mithilfe von Strahlungssensoren ermittelt oder es wird nur indirekt über die Vermessung von temperaturabhängigen Eigenschaften auf die Rotortemperatur geschlossen.

Aus der Druckschrift DE 10 2015 107 666 A1 ist ein Verfahren zur Messung verschiedener Betriebsparameter einer elektrischen Maschine bekannt, bei der eine Messspuleneinheit verwendet wird, die in den Luftspalt zwischen dem Rotor und dem Stator der elektrischen Maschine angeordnet ist. Die Messspuleneinheit umfasst mehrere Messspulen, die in axialer Richtung hintereinanderliegend im Luftspalt angeordnet sind. Die Messspulen sind zu diesem Zweck auf einem länglichen Träger ausgebildet und mit Anschlüssen versehen, die zu Anschlusskontakten geführt sind, die an einer Querseite des Trägers angeordnet und damit zugänglich sind.

Bei dem in dieser Druckschrift beschriebenem Messverfahren werden induzierte Signale von mindestens zwei der Messspulen erfasst und daraus eine Drehposition des Rotors gegenüber dem Stator bzw. ein Polradwinkel der elektrischen Maschine bestimmt. Das Verfahren wird vorteilhaft bei einer elektrischen Maschine durchgeführt, die einen Rotor mit einer Mehrzahl von gegeneinander verdrehten Segmenten aufweist, wobei die ausgewerteten induzierten Signale von Messspulen stammen, die verschiedenen Segmenten zugeordnet sind. Auf diese Weise lässt sich unter Berücksichtigung der (bekannten) Verdrehung der Segmente zueinander aus den induzierten Signalen die Drehposition des Rotors gegenüber dem Stator mit einer Winkelauflösung bestimmen, die um einen Faktor, der der Anzahl der Segmente entspricht, höher ist, als es bei einer Auswertung eines Signals nur einer Messspule der Fall wäre. Zudem kann bei einer Verwendung von ausreichend kleinen Messspulen der vom Rotorfeld induzierte Anteil von dem vom Statorfeld induzierten Anteil in der gemessenen Spannung getrennt werden. Dadurch lässt sich sowohl die Rotorposition als auch die relative Position des gesamten Luftspaltfelds zum Rotor, der drehmomentbestimmende Polradwinkel, bestimmen.

Weiter kann gemäß der genannten Druckschrift eine Widerstandsmessung der einzelnen Messspulen einen Rückschluss auf die Temperatur der Messspulen und damit der Temperatur des Stators geben. Aufgrund der Anordnung von mehreren Messspulen axial am Stator kann eine entlang der Motorachse ortaufgelöste Messung erfolgen.

Bei dem in der Druckschrift DE 10 2015 107666 A1 beschriebenen Verfahren ist eine Bestimmung der Drehposition des Rotors gegenüber dem Stator nur während einer Drehung des Rotors möglich. Insbesondere zur Anlaufsteuerung der elektrischen Maschine ist ein Verfahren wünschenswert, das Aussagen über die Drehposition auch im Stillstand der elektrischen Maschine geben kann. Weiterhin ist im Hinblick auf eine Temperaturmessung ein Verfahren wünschenswert, das in der Lage ist, nicht nur eine Stator-, sondern auch eine Rotortemperatur mit hinreichender Genauigkeit zu ermitteln. Dieses ist mit herkömmlichen Verfahren, wie z. B. der Anordnung von Temperatursensoren aufgrund der Drehung des Rotors nur höchst aufwendig und fehleranfällig zu bewerkstelligen.

Die Druckschrift US 2007/031131 A1 beschreibt eine Impedanzmessung an einer Statorwicklung eines elektrischen Motors, um eine Drehposition seines Rotors zu ermitteln. Dabei wird ein pulsweitenmoduliertes (PWM-) Signal, mit dem die Statorwicklungen beaufschlagt werden, um den Motor anzutreiben, zur Impedanzmessung genutzt. Vorteilhaft kann so eine Drehpositionsmessung durchgeführt werden, ohne einen speziellen Sensor dafür einsetzen zu müssen. Die Messung ist allerdings naturgegeben nur möglich, wenn das PWM-Signal auch anliegt, also der Motor angetrieben wird.

Aus der Druckschrift JP 2017 028804 A ist ein Verfahren bekannt, mit dem eine Temperatur von Permanentmagneten im Rotor eines Synchronmotors bestimmt werden. Dazu werden Impedanzmessungen an mindestens einer Statorspule mithilfe von eingespeister Wechselspannung vorgenommen, wobei aus der gemessenen Impedanz die Temperatur der Permanentmagnete ermittelt wird. Vorteilhaft kann die Temperatur der Permanentmagnete ohne Temperatursensor im Rotor vorgenommen werden. Weiter kann diese Art der Messung auch bei Rotorstillstand erfolgen.

Es ist eine Aufgabe der vorliegenden Erfindung, ein Verfahren der eingangs genannten Art zu schaffen, mit dem Eigenschaften, insbesondere Betriebsparameter, z.B. eine Rotorstellung im Stillstand und eine Temperatur des Rotors der elektrischen Maschine, besonders zuverlässig ermittelt werden können. Es ist eine weitere Aufgabe der vorliegenden Erfindung eine Anordnung mit einer elektrischen Maschine zu beschreiben, mit dem ein derartiges Verfahren durchführbar ist.

Diese Aufgabe wird durch ein Verfahren und eine Anordnung mit den jeweiligen Merkmalen der unabhängigen Ansprüche gelöst. Vorteilhafte Ausgestaltung und Weiterbildung sind in den jeweiligen abhängigen Ansprüchen angegeben.

Bei einem erfindungsgemäßen Verfahren zum Bestimmen von mindestens einer Eigenschaft einer elektrischen Maschine wird ein Hochfrequenzsignal in die mindestens eine Messspule eingespeist und es werden elektrische Größen des Hochfrequenzsignals an der mindestens einen Messspule gemessen. Das Hochfrequenzsignal weist dabei eine Frequenz auf, die außerhalb eines Frequenzspektrums liegt, das bei Drehung der elektrischen Maschine in einem induzierten Signal der Messspule auftritt. Aus den gemessenen elektrischen Größen wird eine Impedanz der Messspule bestimmt. Zusätzlich wird innerhalb der gleichen oder einer nachfolgenden Messung eine in der mindestens einen Messspule induzierte Spannung gemessen. Anschließend wird die mindestens eine Eigenschaft der elektrischen Maschine anhand der ermittelten Impedanz und der gemessenen induzierten Spannung bestimmt.

Erfindungsgemäß wird somit die bekannte im Luftspalt durchgeführte Induktionsmessung mit einer Impedanzmessung kombiniert. Die Kombination ermöglicht es, Eigenschaften zu bestimmen, die sich sowohl auf die Induktionsmessung als auch die Impedanzmessung auswirken, die aber aus einer der Messungen alleine nicht eindeutig zu ermitteln bzw. zu berechnen sind.

Die gemessene Induktionsspannung ergibt sich aus der zeitlichen Änderung der magnetischen Flussdichte im Luftspalt, welche wiederum vom Betriebszustand der Maschine sowie der Reluktanz abhängt. Der Betriebszustand umfasst im Allgemeinen z.B. den Strom in den Statorwicklungen, die Drehzahl des Rotors und die Temperatur der Maschine.

Die gemessene Impedanz ist abhängig vom magnetischen Widerstand in der Umgebung der Spule, welcher sich insbesondere aus der Luftspaltbreite und der relativen Winkelstellung zwischen Rotor und Stator ergibt.

Viele der Eigenschaften der elektrischen Maschine, die von Interesse sind, wie beispielsweise Magnetstärken von Rotormagneten und Rotortemperaturen bei permanenterregten Synchronmaschinen oder Ströme und Temperaturen in Leiterstäben von Käfigen von asynchronen Maschinen, sind häufig von mindestens zwei Größen abhängig, die durch nur eine Art der Messung - nur der induzierten Spannung oder nur der Impedanz - nicht bestimmt werden können. Beispielsweise kann auf die Temperatur der Rotormagnete nur dann korrekt aus einem durch eine Induktionsmessung bestimmten magnetischen Fluss angegeben werden, wenn eine Breite des Luftspalts bekannt ist, die wiederum nur der Impedanzmessung zugänglich ist. Insbesondere da die Breite des Luftspalts ihrerseits temperaturabhängig ist, führt andernfalls eine Annahme eines festen Werts für die Luftspaltbreite zu einer nicht korrekten Messung der Temperatur der Rotormagnete. Die erfindungsgemäße Kombination beider Messverfahren erlaubt in diesem Beispiel eine entsprechende Kompensation des Einflusses der Temperaturabhängigkeit der Luftspaltbreite.

In einer vorteilhaften Ausgestaltung des Verfahrens wird ein Imaginärteil der ermittelten Impedanz bestimmt, der eine magnetische Reluktanz eines durch die Messspule sowie Abschnitte des Stators und des Rotors führenden Magnetkreises widerspiegelt. Weiter bevorzugt werden als Eigenschaften der elektrischen Maschine anhand des Imaginärteils der ermittelten Impedanz und der induzierten Spannung eine Drehposition und/oder eine Drehzahl des Rotors gegenüber dem Stator und/oder ein Polradwinkel bestimmt.

Zumindest die Messung der elektrischen Größen des Hochfrequenzsignals an der mindestens einen Messspule zum Ermitteln der Impedanz der Messspule kann dabei vorteilhaft beim Stillstand des Rotors gegenüber dem Stator ermittelt werden. Auch diesbezüglich ergänzen sich die beiden kombinierten Messverfahren, da die Impedanzmessung insbesondere bei kleinen Drehzahlen des Rotors gegenüber dem Stator bis hin zum Stillstand durchgeführt werden kann, wohingegen die Messung der induzierten Spannung umso größere Signalstärken aufweist, je größer eine Drehzahl des Rotors ist.

In einer weiteren vorteilhaften Ausgestaltung des Verfahrens wird als Eigenschaft der elektrischen Maschine anhand des Imaginärteils der ermittelten Impedanz eine Breite des Luftspalts in Abhängigkeit der Drehposition des Rotors bestimmt. Bevorzugt wird aus der Drehpositions-abhängigen Breite des Luftspalts ein Maß einer Exzentrizität des Rotors ermittelt.

In einer weiteren vorteilhaften Ausgestaltung des Verfahrens wird als Eigenschaft der elektrischen Maschine eine Magnetstärke von Rotormagneten, die in den Rotor eingebettet sind, bestimmt. Dabei wird die Amplitude des magnetischen Flusses des Rotors bestimmt, welche ein Maß für die temperaturabhängige Magnetstärke ist. Aus den bekannten Materialeigenschaften ergibt sich somit indirekt auch die Rotor-Temperatur im Betrieb der Maschine, die anderen Messmethoden nur schwer zugänglich ist.

In einer weiteren vorteilhaften Ausgestaltung des Verfahrens wird als Eigenschaft der elektrischen Maschine ein Widerstand eines Käfigstabs des Rotors bestimmt. Bei diesem Verfahren, das bei Asynchronmaschinen mit Rotoren mit Käfigstäben eingesetzt werden kann, wird eine resultierende magnetische Flussdichte im Luftspalt gemessen, die ein Verhältnis aus dem Magnetfeld des Stators und der Antwort des Rotors darstellt. Die resultierende magnetische Flussdichte ist vom Strom im Käfigstab abhängig, der wiederum vom elektrischen Widerstand des Stabs abhängig ist. Da der so ermittelte Käfig-Widerstand stark temperaturabhängig ist, kann von dem elektrischen Widerstand zudem auf die Temperatur des Käfigstabs geschlossen werden.

Dabei ist der magnetische Fluss von der Luftspaltbreite abhängig, da diese maßgeblich den magnetischen Widerstand bestimmt. In beiden Fällen der Rotor-Temperaturmessung ist daher der Einfluss der Luftspaltbreite zu kompensieren, was durch die erfindungsgemäße Ermittlung von Impedanz und induzierter Spannung erfolgen kann.

Weiter kann ein Realteil der ermittelten Impedanz bestimmt werden, der einen elektrischen Widerstand der Messspule widerspiegelt, aus dem sich eine Temperatur der Messspule damit des Stators ermitteln lässt.

Vorteilhaft wird zur Ermittlung der Impedanz das Signal der Messspule gefiltert, bevorzugt durch einen schmalbandigen Bandpassfilter oder einen Lock-in Verstärker, die auf die anregende Hochfrequenz abgestimmt sind. Die zur Anregung benutzte Hochfrequenz ist weiter bevorzugt so gewählt, dass sie sich von einem ganzzahligen Vielfachen einer Schaltfrequenz eines Umrichters unterscheidet, der mit der elektrischen Maschine gekoppelt ist. Auf diese Weise werden störende Einflüsse des Umrichters möglichst klein gehalten. Dabei kann die zur Anregung benutzte Hochfrequenz dynamisch im Betrieb variiert werden, da sich auch das Störspektrum des Umrichters im Betrieb mit der Drehzahl der Maschine ändert.

In einer weiteren vorteilhaften Ausgestaltung des Verfahrens werden Messungen jeweils an einer Gruppe von mindestens zwei miteinander verschalteten Messspulen durchgeführt, wobei eine gleichsinnige Verschaltung vorteilhaft für die Messung der induzierten Spannung ist, da sich die in den einzelnen Messspulen einer Gruppe induzierten Spannungen addieren, wohingegen eine gegensinnige Verschaltung die induzierten Spannungen möglichst eliminiert, was vorteilhaft für die Impedanzmessung ist.

In einer weiteren vorteilhaften Ausgestaltung des Verfahrens sind mindestens zwei Messspulen oder Messspulengruppen axial hintereinanderliegend in dem Luftspalt angeordnet, so dass die Messungen an verschiedenen Positionen im Luftspalt durchgeführt werden können. Zudem können die verschiedenen Messpositionen verschiedenen Segmenten des Rotors zugeordnet werden, wenn es sich um einen segmentierten Rotor handelt.

In einer weiteren vorteilhaften Ausgestaltung des Verfahrens können die Messungen der Impedanzen bzw. der induzierten Spannungen der mindestens zwei Messspulen oder Messspulengruppen mit Hilfe eines Multiplexers zeitlich nacheinander ausgeführt werden. Auf diese Weise kann der apparative Aufwand zur Messung und Auswertung verringert werden.

Eine erfindungsgemäße Anordnung aus einer elektrischen Maschine mit einem Stator und einem Rotor sowie einem dazwischenliegenden Luftspalt, in dem eine Messspuleneinheit angeordnet ist, zeichnet sich durch eine Auswerteeinheit zur Impedanzmessung und zur Messung einer induzierten Spannung in der mindestens einen Messspule aus, die zur Durchführung eines der zuvor genannten Verfahren eingerichtet ist. Es ergeben sich die im Zusammenhang mit dem Verfahren beschriebenen Vorteile.

Die Erfindung wird nachfolgend anhand eines Ausführungsbeispiels mit Hilfe von Figuren näher erläutert. Die Figuren zeigen:
- Figur 1: eine perspektivische Ansicht eines Teils eines Stators einer elektrischen Maschine mit einer Messspuleneinheit;
- Figur 2a, b: jeweils eine Draufsicht auf eine Messspuleneinheit zur Verwendung in einem Luftspalt einer elektrischen Maschine;
- Figur 3: ein Ausschnitt eines schematischen Schnittbildes durch eine elektrische Maschine in radialer Richtung; und
- Figur 4: eine gemessene Impedanzkurve, die eine Impedanz einer Messspule im Luftspalt einer elektrischen Maschine widergibt.

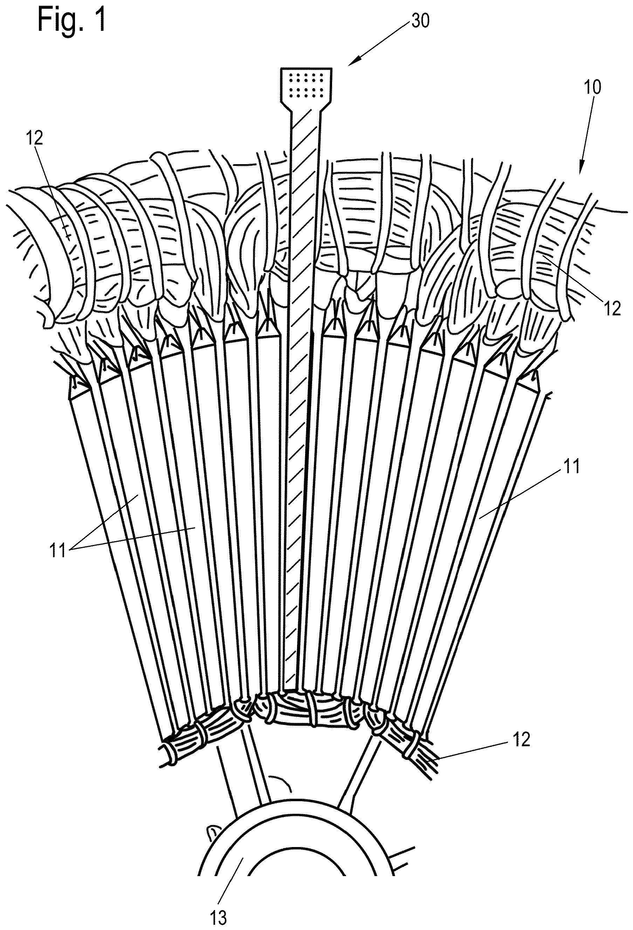

Figur 1 zeigt in einer perspektivischen Ansicht einen Blick in einen Stator 10 einer elektrischen Maschine. Von dem Stator 10 ist lediglich ein Abschnitt entlang seines Umfangs wiedergegeben. Ein zugehöriger Rotor ist in dieser Darstellung nicht wiedergegeben, um Einblick in den Stator 10 gewähren zu können.

Entlang einer inneren Mantelfläche des Stators 10 ist eine Vielzahl von in axialer Richtung verlaufenden Statorzähnen 11 zu erkennen. Die Statorzähne 11 sind der in dieser Perspektive sichtbare Teil eines Statorblechpakets. In Nuten des Statorblechpakets, die die Statorzähne 11 voneinander trennen, verlaufen Drähte einer Statorwicklung 12. Durch die Statorwicklung 12 wird im Betrieb der elektrischen Maschine ein Statormagnetfeld, kurz Statorfeld genannt, erzeugt. Das Statorfeld weist umlaufend entlang der Mantelfläche mehrere Pole auf, wobei im Bereich eines jeden Pols jeweils eine Mehrzahl der Statorzähne 11 liegt.

Im unteren Teil der Figur sind radial verlaufende Gehäusestäbe zu erkennen, die das Statorgehäuse mit einem zentralen Lagersitz 13 verbinden. In diesem Lagersitz 13 ist im zusammengebauten Zustand der elektrischen Maschine ein Lager für eine Achse des Rotors angeordnet.

Auf einem der Statorzähne 11 ist eine Messspuleneinheit 30 angeordnet. Die Messspuleneinheit 30 verläuft entlang der gesamten Länge des Statorzahns 11 und ist damit in axialer Richtung parallel zur hier nicht sichtbaren Rotorachse ausgerichtet. Die Messspulenanordnung 30 ist in ihrer Breite der Breite des Statorzahns 11 angepasst und ist somit deutlich kleiner als die Breite eines Pols. An dem in der Figur 1 obenliegenden Ende des betreffenden Statorzahns 11 ragt die Messspuleneinheit 30 über den Statorzahn 11 und die Wicklung 12 hinaus und mündet in einem Anschlussbereich.

Die Messspuleneinheit 30 ist bevorzugt als eine dünne flexible Folie ausgebildet, die auf dem Statorzahn 11 fixiert ist, beispielsweise aufgeklebt ist. Das obere, über den Statorzahn 11 hinausragende Ende kann aufgrund der Flexibilität nach hinten geneigt werden, um den Anschlussbereich im zusammengebauten Zustand der elektrischen Maschine kontaktieren zu können. Die Dicke der Messspuleneinheit 30 liegt bevorzugt in einem Bereich von weniger als 200 µm (Mikrometer) besonders bevorzugt weniger als 100 µm, um die Messspuleneinheit 30 auch in einer elektrischen Maschine einsetzen zu können, die einen nur schmalen Luftspalt zwischen Rotor und Stator aufweist.

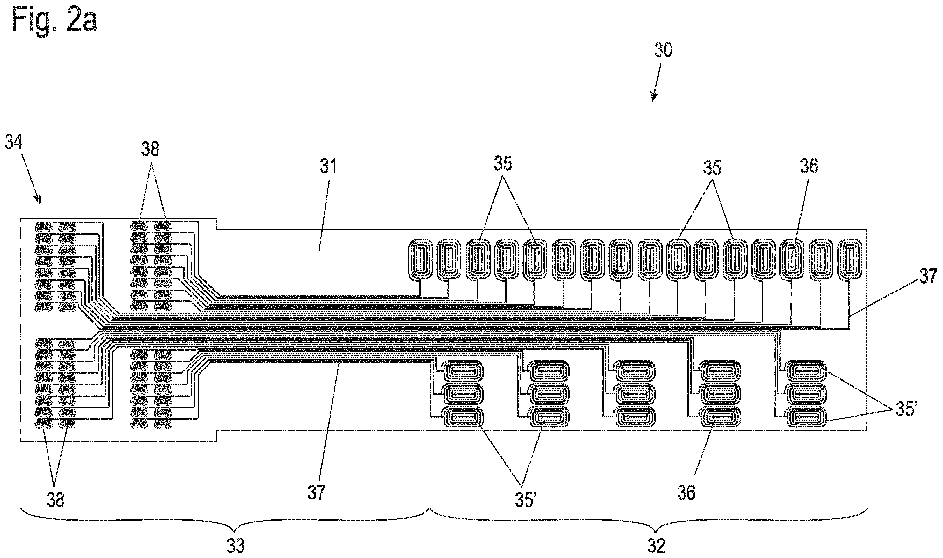

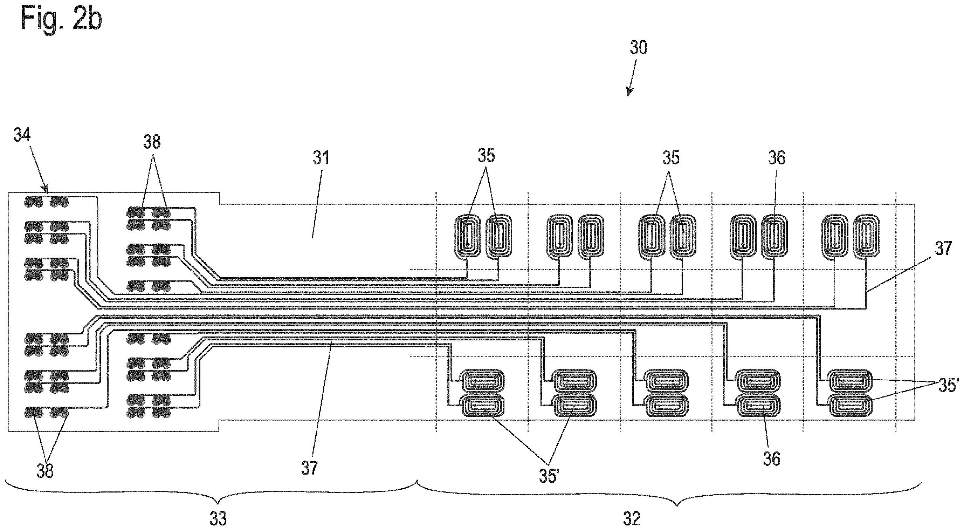

Die Figuren 2a und 2b zeigen jeweils eine Messspuleneinheit 30, wie sie beispielsweise bei einem Stator 10 gemäß Figur 1 verwendet werden kann, detaillierter in einer Draufsicht. Die in den Figuren 2a, b dargestellten Ausführungsbeispiele der Messspuleneinheit 30 entsprechen in ihrem Grundaufbau im Wesentlichen der in Figur 1 verwendeten Messspuleneinheit 30. Um Details besser wiedergeben zu können, ist in den Figuren 2a, b abweichend von der Figur 1 eine Messspuleneinheit 30 dargestellt, die gemessen an ihrer Länge breiter ist, als dies im Fall des Ausführungsbeispiels der Figur 1 ist.

Die Messspuleneinheit 30 weist jeweils einen länglichen Träger 31 auf, der sich in einen Spulenabschnitt 32 und einem sich daran anschließenden Anschlussabschnitt 33 unterteilen lässt. An einem dem Spulenabschnitt 32 gegenüberliegenden Ende mündet der Anschlussabschnitt 33 in einen Anschlusskopf 34.

Der Spulenabschnitt 32 ist der Teil der Messspuleneinheit 30, der sich entlang einem der Statorzähne 11 (vergl. Figur 1) erstreckt und auf diesem fixiert, bevorzugt aufgeklebt ist. Entlang des Spulenabschnitts 32 ist eine Mehrzahl von Messspulen 35 ausgebildet, die gleichmäßig voneinander beabstandet bzw. in gleichmäßig voneinander beabstandeten Gruppen in Längsrichtung der Messspuleneinheit 30 hintereinander positioniert sind. Die Messspulen 35 sind als spiralförmige Planarspulen mit rechteckförmigen Windungen ausgebildet. Jede der Messspulen ist bevorzugt zweilagig ausgebildet, wobei eine erste Lage der Figur 2 sichtbar ist und eine zweite Lage mit gleichen Wicklungssinn auf der in der Figur 2 nicht sichtbaren Rückseite der Messspuleneinheit 30 angeordnet sind. Zur Verbindung der beiden Lagen untereinander ist im zentralen Bereich einer jeden Messspule 35 eine Durchkontaktierung 36 vorgesehen.

Jede der Messspulen 35 ist mit separaten Zuleitungen 37 mit entsprechenden Anschlusskontakten 38 im Anschlusskopf 34 verbunden, um von außen kontaktiert werden zu können. Die Anschlusskontakte sind somit an einer Querseite des Trägers angeordnet, wodurch alle Messspulen 35 außerhalb des Luftspalts kontaktiert werden können. Bevorzugt liegen alle Anschlusskontakte an einer Querseite. Alternativ und insbesondere bei elektrischen Maschinen mit einer langen Bauform und/oder bei einer großen Anzahl an Messspulen 35 können auch beide Querseiten mit Anschlusskontakten 38 versehen sein.

Jeweils eine dem Anschluss einer Messspule 35 dienende Zuleitung 37 verläuft hier sichtbar auf der Oberseite der Messspuleneinheit 30. Eine zweite Zuleitung ist auf der hier nicht sichtbaren Unterseite der Messspuleneinheit 30 angeordnet. Die Zuleitungen 37 auf der Ober- und der Unterseite der Messspuleneinheit 30 verlaufen möglichst deckungsgleich, wodurch sich in den Zuleitungen 37 induzierte Spannungen auf der Ober- und der Unterseite aufheben.

Mit einer dünnen flexiblen Folie als Träger 31 kann die Messspuleneinheit 30 vorteilhaft als eine flexible Leiterplatte (FPC - Flexible Printed Circuit) ausgebildet sein. Sowohl die Messspulen 35 als auch die Zuleitungen 37 sind dabei aus einer auf den Träger 31 aufgebrachten dünnen Metallschicht herausgearbeitet, bevorzugt in einem Ätzprozess. Auf Ober- und Unterseite der Messspuleneinheit 30 ist nach Strukturierung der Messspulen 35 und der Zuleitungen 37 bevorzugt eine isolierende Abschlusslage, beispielsweise ein Isolierlack aufgebracht. In alternativen Ausgestaltungen der Messspuleneinheit 30 werden andere leiterbahnbildende Verfahren eingesetzt. In einer alternativen Ausgestaltung ist denkbar, dass zumindest Teile der Messspuleneinheit 30, z.B. die Messspulen 35, auch unmittelbar, d.h. ohne den Träger 31, auf den Statorzahn 11 aufgebracht sind.

In alternativen Ausgestaltungen kann auch eine mehr als zweilagige Messspule 35 vorgesehen sein, beispielsweise indem ein Stapel von zwei oder mehr Trägerfolien verwendet wird, die aufeinandergelegt den Träger 31 bilden. Mit jeder zusätzlich aufgelegten Folienlage kann eine weitere Spulenlage gebildet werden. Mit zwei aufeinander gelegten Folien als Träger 31 kann beispielsweise eine dreilagige Messspule 35 gebildet werden und mit drei aufeinandergelegten Folien eine vierlagige Messspule 35 gebildet werden. Je größer die Anzahl der Lagen der Spule, umso höher sind die induzierten Spannungen und umso einfacher bzw. genauer kann eine Auswertung erfolgen. Die Anzahl der Folienlagen und damit der Lagen der Messspulen 35 ist dabei jedoch durch die maximale Dicke der Messspuleneinheit 30 sowie des Luftspalts limitiert.

Bei dem Ausführungsbeispiel der Messspuleneinheit 30 gemäß Figur 2a sind unabhängig voneinander in einem in der Figur oberen Abschnitt einreihig hintereinander angeordnete Messspulen 35 angeordnet. Diese Messspulen 35 erstrecken sich ausschließlich in axialer Richtung entlang des Luftspalts, in dem die Messspuleneinheit 30 eingesetzt wird. Eine Messspuleneinheit 30 mit nur diesen Spulen 35, ergänzt um die zugeordneten Zuleitungen 37 und Anschlüsse 38 ist für sich genommen bereits mit entsprechender Auswertetechnik zur Durchführung eines erfindungsgemäßen Verfahrens geeignet.

Wenn die Messspuleneinheit 30 in Verbindung mit einem segmentierten Rotor eingesetzt wird, der in axialer Richtung mehrere verdreht zueinander ausgerichtete Segmente aufweist, kann einem Segment jeweils eine Messspule 35 oder auch mehrere Messspulen 35 zugeordnet sein. Jeweils zwei Messspulen 35 können dabei mit gegensinnigem Wicklungssinn elektrisch ebenfalls gegensinnig in Reihe geschaltet sein, um einen Einfluss äußerer Störungen zu minimieren. Die Messung der induzierten Spannung kann weiterhin über einen Mittelabgriff von zwei derartig verschalteten Messspulen 35 realisiert werden.

Beim Ausführungsbeispiel der Figur 2a ist in dem unteren Abschnitt der Messspuleneinheit 30 eine alternative Anordnung von Messspulen 35' wiedergegeben, mit denen ebenfalls das erfindungsgemäße Verfahren durchgeführt werden kann. Bei dieser Anordnung sind in axialer Richtung vorliegend 5 Gruppen von jeweils drei Messspulen 35' entlang des Luftspalts verteilt. Je nach dem, auf welche Detailaspekt des erfindungsgemäßen Verfahrens abgestellt wird, ist eine lineare Anordnung in Reihen, wie sie für die Messspulen 35 gezeigt ist, oder eine Anordnung bei der innerhalb einer Gruppe jeweils mehrere Messspulen 35' in Drehrichtung des Rotors hintereinander im Luftspalt angeordnet sind, vorteilhaft.

Beim Ausführungsbeispiel der Fig. 2b sind 5 Gruppen von Messspulen 35 und 35' mit je zwei Messspulen 35, 35' vorgesehen. Die Messpulengruppen sind zur Verdeutlichung durch gestrichelte Linien voneinander getrennt. Bei dieser Anordnung können vorteilhaft die beiden Messspulen 35, 35' einer Gruppe für eine Impedanzmessung so verschaltet werden, dass sich in ihnen induzierte Signale möglichst aufheben. Für eine Messung der induzierten Spannung wird entsprechend so verschaltet, dass sich die in den einzelnen Spulen induzierten Spannungen addieren.

Die in Figur 2a bzw. b wiedergegebene Messspuleneinheit 30 umfasst Messspulen 35, 35' in beiden geeigneten und je nach Anwendungsfall vorteilhafteren Anordnungsgeometrien. Die Signale dieser Messspulen 35, 35' können gleichzeitig und/oder alternativ ausgewertet werden.

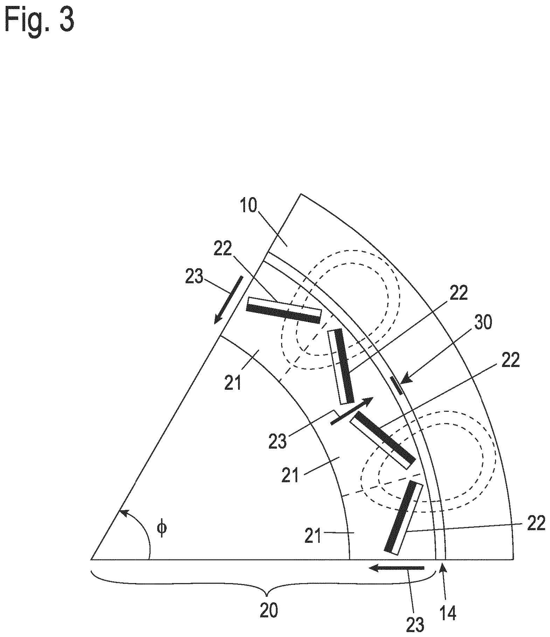

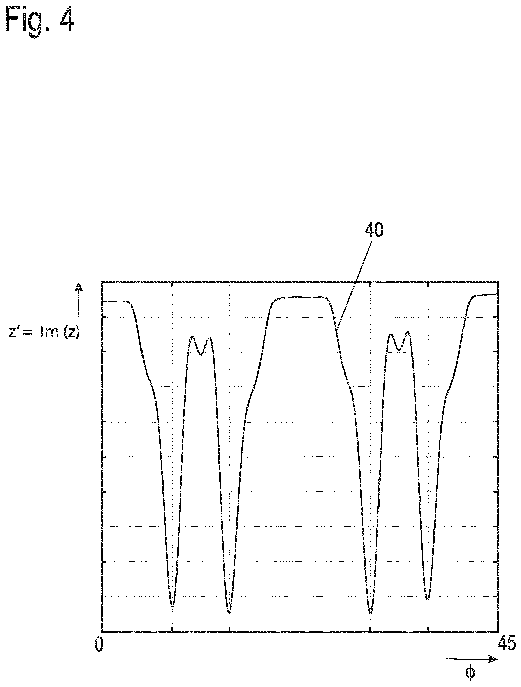

Nachfolgend wird anhand der Figuren 3 und 4 ein Ausführungsbeispiel eines anwendungsgemäßen Verfahrens zur Bestimmung von Betriebsparametern beispielhaft anhand einer permanenterregten Synchronmaschine näher erläutert.

Figur 3 zeigt zunächst einen Querschnitt in radialer Richtung, also senkrecht zur Achse einer schematisch angedeuteten elektrischen Maschine. Von dem Querschnitt ist ein 45 Grad Segment, also ein Achtel des gesamten Querschnitts dargestellt. Das gezeigte Segment wiederholt sich entsprechend sieben Mal in dem nicht dargestellten Bereich.

Von der insgesamt zylinderförmigen elektrischen Maschine ist im Außenbereich der Stator 10 angedeutet. Konzentrisch zum Stator 10 ist drehbar ein Rotor 20 gelagert, dessen äußerer Umfang von dem Stator 10 durch einen Luftspalt 14 getrennt ist. Der Stator 10 ist schematisch und ohne innere Struktur wiedergegeben, Statorzähne (vergleiche Bezugszeichen 11 in Figur 1) oder eine Statorwicklung (vergleiche Bezugszeichen 12 in Figur 1) sind aufgrund der Übersichtlichkeit hier nicht dargestellt.

Entlang des Umfangs sind beim Rotor 20 jeweils geometrisch in sich identische Abschnitte 21 ausgebildet, wobei jeder Abschnitt 21 zwei Permanentmagnete 22 aufnimmt, die ein statisches Erregerfeld bilden. Die Permanentmagnete 22 sind in radialer Richtung magnetisiert. In der Figur 3 sind N- bzw. S-Pol der Permanentmagnete 22 durch leere bzw. ausgefüllte Bereiche der Permanentmagnete 22 symbolisiert. Die Permanentmagnete 22 eines Abschnitts 21 sind leicht gewinkelt v-förmig zueinander angeordnet, mit im Wesentlichen gleicher magnetischer Ausrichtung. Benachbart aneinander angrenzende Abschnitte 21 sind jeweils magnetisch gegensinnig ausgerichtet. Es ergeben sich so die schematisch durch gestrichelt dargestellte Feldlinien verdeutlichten Magnetkreise. Jeweils mittig in jedem Abschnitt wird ein Rotorpol 23 gebildet. Darüber hinaus können Erregerwicklungen vorgesehen sein, in denen ein induziertes Magnetfeld im Betrieb entsteht, durch das höhere Rotormagnetstärken möglich sind, als sie von den Permanentmagneten 22 hervorgerufen werden können.

Im Luftspalt 14 ist eine Messspuleneinheit 30 positioniert, z.B. die in Figur 2a oder 2b dargestellte Messspuleneinheit 30 mit hintereinander in Luftspalt 14 liegenden Messspulen 35 oder gruppenweise hintereinander und innerhalb der Gruppen nebeneinanderliegenden Messspulen 35'.

Bei einer Drehung des Rotors 20 gegenüber dem Stator 10 passieren die verschiedenen Rotorpole 23 die Messspuleneinheit 30 mit ihren Messspulen 35 und/oder 35'. Entsprechend wird in den Messspulen 35, 35' eine Spannung induziert, die, wie beispielsweise in der eingangs genannten Druckschrift DE 10 2015 107666 A1 beschrieben ist, gemessen wird und ausgewertet werden kann.

Anmeldungsgemäß wird zusätzlich bei dem vorliegenden Verfahren eine Impedanz mindestens einer der Messspulen 35, 35' ermittelt.

Die Impedanz wird bevorzugt als komplexe Größe bestimmt, die sich aus einem Realteil, der den im Wesentlichen den in der Regel temperaturabhängigen ohmschen Widerstand der Messspulen 35, 35' angibt, und einem Imaginärteil zusammensetzt. Der Imaginärteil der Impedanz ist proportional zur Induktivität der Messspule 35, 35', die umgekehrt proportional zu dem magnetischen Widerstand (Reluktanz) des resultierenden magnetischen Kreises ist, in den die Messspule 35, 35' eingebunden ist.

Bei der vorgesehenen Anordnung der Messspulen 35, 35' im Luftspalt 14 der elektrischen Maschine bedeutet das, dass ein während der Messung (siehe unten) in die Messspule 35, 35' eingeprägter Strom einen magnetischen Fluss erzeugt, der sich über den Luftspalt 14 hinweg über den Rotor 20 und den Stator 10 der Maschine schließt. Der magnetische Kreis wird sich zumindest zu einem Teil über den Abschnitt des Stators 10 schließen, an dem die Messspule 35, 35' angeordnet ist, beispielsweise dem entsprechenden Statorzahn (vergl. 11 der Figur 1).

Die Reluktanz des entstehenden magnetischen Kreises ist maßgeblich von der Breite des Luftspalts 14 bestimmt, da diese bezüglich des magnetischen Widerstands dominierend gegenüber dem Eisenmaterial von Rotor 20 und Stator 10 ist.

Darüber hinaus ist die Reluktanz beeinflusst durch die im Rotor 20 angeordneten Permanentmagnete 22, da die relative Permeabilität der Permanentmagnete 22 oder auch ggf. von Lufttaschen, die angrenzend an den Permanentmagneten 22 vorgesehen sind, deutlich unter der relativen Permeabilität des sonstigen Materials (typischerweise Elektroblech) des Rotors 20 und des Stators 10 liegt. Weiter ist die Reluktanz abhängig vom Grad der magnetischen Sättigung der Materialien. Da die relative Permeabilität gängiger magnetischer Merkstoffe keine nennenswerte Temperaturabhängigkeit zeigt, ist auch die Reluktanz des magnetischen Kreises im Wesentlichen temperaturunabhängig.

Zusammenfassend bedeutet dies, dass durch Messung der Impedanz der Messspulen 35, 35' die Reluktanz, die ein der Spule zugeordneter magnetischer Kreis zeigt, ermittelt werden kann, wobei diese Reluktanz von der lokalen Luftspaltbreite im Bereich der Messspule 35, 35' sowie der Stellung des Rotors 20 sowie ggf. einer magnetischen Sättigung abhängig ist.

Figur 4 zeigt eine Impedanzkurve 40, die einen Imaginärteil z'=lm(z) einer gemessenen Impedanz z einer der Messspulen 35, 35' in Abhängigkeit eines Drehwinkels ϕ des Rotors 20 angibt. Der Imaginärteil z' der Impedanz z wird auch als Blindwiderstand bezeichnet. Er ist proportional zu einer Induktivität der entsprechenden Messspule 35, 35', die wiederum von ihrer Umgebung beeinflusst wird, konkret von der Reluktanz des magnetischen Kreises, in dem sich die Messspule 35, 35' befindet.

Zur Messung der Impedanz z wird die Messspule 35, 35' mit einem hochfrequenten Signal angeregt. Um die Signalquelle von einer bei Drehung des Rotors 20 in der Messspule 35, 35' induzierten Spannung zu entkoppeln, ist es vorteilhaft, das Signal mit einer hochohmigen Stromquelle einzuprägen, beispielsweise mit einem Transkonduktanzverstärker. Während der Signalanregung werden bevorzugt mit einer Vierleitermessung Strom und Spannung gemessen und daraus die Impedanz der Messspule 35, 35' bestimmt. Die Frequenz des hochfrequenten eingekoppelten Signals ist bevorzugt so zu wählen, dass sie außerhalb eines Frequenzspektrums liegt, das bei Drehung der elektrischen Maschine im induzierten Signal auftritt.

Dabei ist auch die Umrichterfrequenz, mit der Schaltelemente eines Umrichters arbeiten, zu berücksichtigen. Da die Frequenz von Oberschwingungen des Umrichters die maximale Grundfrequenz um mehrere Dekaden übersteigen kann, ist es vorteilhaft eine Anregungsfrequenz zu wählen, die zwischen Frequenzmaxima des Schwingungsspektrums des Umrichters liegen. Ganzzahlige Vielfache der Schaltfrequenz des Umrichters sind zu vermeiden. In einer vorteilhaften Weiterbildung wird die Anregungsfrequenz abhängig von der im Betrieb wechselnden Schaltfrequenz des Umrichters zur Betriebszeit gewählt. So kann dynamisch auch im Betrieb störenden Frequenzen ausgewichen werden.

Das ausgekoppelte Signal wird bevorzugt gefiltert, um Komponenten bei der Anregungsfrequenz des hochfrequenten Signals zur Analyse auszukoppeln. Dieses kann beispielsweise durch einen bevorzugt schmalbandigen Bandpassfilter geschehen. Weiter vorteilhaft ist die Verwendung eines (ggf. Dual-phase) Lock-in Verstärkers.

Parallel zur Impedanzmessung kann ein niederfrequenterer Anteil des Signals der Messspulen 35, 35' ausgewertet werden, der die in der Spule induzierte Spannung aufgrund einer Drehbewegung angibt. Diese Auswertung liefert Signale, die der in der Druckschrift DE 10 2015 107666 A1 beschriebenen entsprechen. Alle in dieser Druckschrift angegebenen Analyseverfahren zur Berechnung von Betriebsparametern können folglich bei der hier beschriebenen elektrischen Maschine mit der Messspuleneinheit 30 durch geringfügige Erweiterung der Auswerteschaltung zusätzlich durchgeführt werden.

Das beschriebene Verfahren zur Bestimmung der Impedanz der Messspule 35, 35' kann an einer oder an mehreren der Messspulen der Messspuleneinheit 30 durchgeführt werden. Werden mehrere Messspulen 35, 35' vermessen, kann dieses bei geeigneter Signaleinkopplung (z. B. kapazitiv) gleichzeitig erfolgen. Aufgrund unvermeidlicher magnetischer Kopplung ist eine sequenzielle Messung, bei der die verschiedenen Messspulen 35, 35' nacheinander vermessen werden, jedoch bevorzugt. Ein sequenzielles Verfahren kann mit Hilfe eines Multiplexers durchgeführt werden und bietet den weiteren Vorteil, dass mehrere Messspulen mit einer einzigen Signalquelle und einer einzigen Frequenzanalyseschaltung vermessen werden können.

Wie zuvor erwähnt, ist die Reluktanz des magnetischen Kreises, die sich in der Impedanz z widerspiegelt, abhängig vom Drehwinkel des Rotors 20, da dieser im Hinblick auf die relativen Permeabilitäten, insbesondere durch die eingesetzten Permanentmagnete 22, nicht zylindersymmetrisch ist. Entsprechend spiegelt sich im Verlauf der Impedanzkurve 40, die in der Figur 4 über einen Winkelbereich dargestellt ist, der gerade den in Figur 3 gezeigten Segment der elektrischen Maschine entspricht, die Anordnung der Permanentmagnete 22 und der magnetischen Pole 23 wider.

Die Art des Pols (Nord- bzw. Südpol) ist anhand der Impedanzkurve 40 alleine jedoch nicht unterscheidbar. Durch kurze Einprägung von Strom durch den Umrichter in die Statorwicklung (Bezugszeichen 12, vergl. Figur 1) können jedoch Bereiche des Rotors 20 abhängig von dem Rotorpol 23 in eine magnetische Sättigung gebracht werden und dadurch unterschieden werden. Bevorzugt wird ein sogenannter I_{d} - Strom eingeprägt, der kein Drehmoment erzeugt, sodass dieses Verfahren ebenfalls im Stillstand des Rotors 20 der elektrischen Maschine durchgeführt werden kann. Um einen solchen I_{d} - Strom, der keinen Drehmoment erzeugt, mit der benötigten Phasenlage erzeugen zu können, ist die Drehstellung des Rotors 20 zumindest auf 180 Grad genau bekannt sein, was in der Regel möglich ist, wenn der Rotor 20 ein so genannter segmentierter Rotor ist und verschiedene Messspulen 35, 35' den in axialer Richtung hintereinander angeordneten Rotorsegmenten zugeordnet sind.

Weiterhin zeigt sich an dem Kurvenverlauf 40, dass sich wiederholende Merkmale, wie bspw. die Doppelspitzen beim Übergang von einem Rotorabschnitt 21 zum nächsten nicht exakt gleich ausgeprägt sind. Grund hierfür sind kleine Toleranzen im Material der einzelnen Permanentmagnete 22 oder Toleranzen in der genauen Positionierung dieser Magnete innerhalb des Rotors 20. Diese können nach Art einer Signatur verwendet werden, um auch ohne dem Einsatz von Sättigungseffekten die Rotorposition über den gesamten Drehwinkel von 0 bis 360 Grad eindeutig ermitteln zu können.

Der in der Figur 4 gezeigte Kurvenverlauf wiederholt sich bei einer vollständigen Umdrehung des Rotors 20 mehrfach, beim gezeigten Beispiel acht Mal. Wie erwähnt können kleine Unterschiede im Kurvenverlauf als Signatur einzelner Permanentmagnete 22 angesehen werden. Aus Symmetriegründen ist jedoch anzunehmen, dass alle Magnetpaare in der Maschine grundsätzlich identisch aufgebaut sind. Stark ausgeprägte Variation der Amplitude innerhalb einer mechanischen Periode beruhen daher in der Regel auf einer Exzentrizität des Rotors 20, die zu einer periodischen Variation der Luftspaltbreite führt.

Auch eine Abnahme der Magnetkraft einzelner der Permanentmagnete 22, ein sogenanntes Derating, kann zu einer starken periodischen Schwankung der Amplitude führen. Exzentrizität und Derating unterscheiden sich in der Regel jedoch durch die Kurvenform der Variation, die bei einer Exzentrizität eher einen sinusförmigen und bei einem Derating einen eher sprunghaften Verlauf zeigt. Eine Beeinflussung des Kurvenverlaufs ist insbesondere in den magnetisch hochgesättigten Bereichen (z.B. in den nach unten weisenden Spitzen in Figur 4) zu beobachten. Eine Exzentrizität (oder auch Luftspaltänderungen anderer Ursache) sind dagegen im gesamten Signalverlauf zu sehen. Um eine Vermischung mit anderen Ursachen zu vermeiden, kann eine Auswertung in magnetisch schwachgesättigten Bereichen (z.B. den Plateaus in Figur 4) durchgeführt werden.

Durch die Berechnung eines gleitenden Mittelwerts über eine elektrische Periode können die einzelnen signifikanten Spitzen (Peaks) im Kurvenverlauf geglättet werden und es kann beispielsweise eine Kennzahl bestimmt werden, die ein Maß für die Luftspaltbreite in Abhängigkeit des Rotorwinkels (und damit für die dynamische Exzentrizität) ist.

Dieses ermöglicht es Änderungen der Luftspaltbreite zu detektieren, die in elektrischen Maschinen aus verschiedenen Gründen auftreten können, z.B. einer Ausdehnung des Rotors 20 durch Fliehkrafteinfluss bei hohen Drehzahlen, durch eine thermische Verformung von Rotor 20 und Stator 10 durch Wärmeeintrag, durch eine mechanische Verformung von Rotor 20 und Stator 10 durch äußere Einwirkung und/oder durch eine baulich bedingte Exzentrizität des Rotors (statisch oder dynamisch).

Eine gemessene umlaufende Variation der Luftspaltbreite kann insbesondere eingesetzt werden, um Ergebnisse weiterer Messungen, die von der Luftspaltbreite abhängig sind, bezüglich der Luftspaltbreite zu kompensieren. Dieses kann z.B. bei der in der Druckschrift DE 10 2015 107666 A1 beschriebenen Messung der Rotortemperator über die Remanenzflussdichte eingesetzt werden. Dabei wird die Amplitude des magnetischen Flusses des Rotors bestimmt, welche ein Maß für die temperaturabhängige Magnetstärke ist. Aus den bekannten Materialeigenschaften ergibt sich somit die Temperatur.

Die anmeldungsgemäße Impedanzmessung bietet weiterhin die Möglichkeit, eine Rotortemperatur bei einer Asynchronmaschine als elektrische Maschine zu bestimmen.

Dazu kann der Widerstand eines Käfigstabs des Rotors der Asynchronmaschine indirekt gemessen werden, indem das Verhältnis aus einem anregenden Magnetfeld des Stators und der Antwort des Rotors, also eine resultierende magnetische Flussdichte, bestimmt wird. So kann die Anregung unter Zuhilfenahme des Umrichters über die Statorwicklungen eingebracht werden, wobei entweder die drehmomentbildende Stromkomponente oder ein überlagertes Signal genutzt werden kann. Die resultierende magnetische Flussdichte ist vom Strom im Käfigstab abhängig, der wiederum vom elektrischen Widerstand des Stabs abhängig ist. Da der so ermittelte Käfig-Widerstand stark temperaturabhängig ist, kann von dem elektrischen Widerstand auf die Temperatur geschlossen werden.

In beiden Fällen der Rotor-Temperaturmessung ist der Einfluss der Luftspaltbreite zu kompensieren, was mit dem zuvor beschriebenen Verfahren erfolgen kann. Grund dafür ist die Abhängigkeit des magnetischen Flusses von der Luftspaltbreite, da diese maßgeblich den magnetischen Widerstand bestimmt. Hierbei ist insbesondere zu beachten, dass eine Beeinflussung der Messung durch das Feld des Rotors vermieden wird. Dies ist dann gegeben, wenn die Induktivität, d.h. der Imaginärteil der Impedanz, dann ausgewertet wird, wenn die Messspule durch Drehung des Rotors außerhalb des Wirkbereichs der Käfigstäbe bzw. der Permanentmagnete steht. Dies ist durch die hohe Winkelauflösung des Messverfahrens möglich.

### Bezugszeichen

- 10: Stator
- 11: Statorzahn
- 12: Statorwicklung
- 13: Lageraufnahme
- 14: Luftspalt

- 20: Rotor
- 21: Rotorabschnitt
- 22: Permanentmagnet
- 23: Rotorpol

- 30: Messspuleneinheit
- 31: Träger
- 32: Spulenabschnitt
- 33: Anschlussabschnitt
- 34: Anschlusskopf
- 35, 35': Messspule
- 36: Durchkontaktierung
- 37: Zuleitung
- 38: Anschlusskontakt

- 40: Impedanzkurve

- z: Impedanz
- z': Imaginärteil der Impedanz

- φ: Drehwinkel

## Patentansprüche

1. Verfahren zur Bestimmung von mindestens einer Eigenschaft einer elektrischen Maschine mit einem Stator (10) und einem Rotor (20) sowie einem dazwischenliegenden Luftspalt (14), in dem eine Messspuleneinheit (30) angeordnet ist, die mindestens eine Messspule (35, 35') aufweist, mit den folgenden Schritten:
- Einspeisen eines Hochfrequenzsignals in die mindestens eine Messspule (35, 35') mit einer Frequenz, die außerhalb eines Frequenzspektrums liegt, das bei Drehung der elektrischen Maschine in einem induzierten Signal der mindestens einen Messspule (35, 35') auftritt;
- Messen von elektrischen Größen des Hochfrequenzsignals an der mindestens einen Messspule (35, 35');
- Ermitteln einer Impedanz (z) der mindestens einen Messspule (35, 35') aus den gemessenen elektrischen Größen;
- Bestimmen einer bei einer Drehung des Rotors (20) gegenüber dem Stator (10) induzierten Spannung der mindestens einen Messspule (35, 35'); und
- Bestimmen der mindestens einen Eigenschaft der elektrischen Maschine anhand der ermittelten Impedanz (z) und der induzierten Spannung, wobei sowohl die Impedanz (z) als auch die induzierte Spannung eine Funktionsabhängigkeit von der mindestens einen bestimmten Eigenschaft aufweist.

2. Verfahren nach Anspruch 1, bei dem die mindestens eine bestimmte Eigenschaft eine Funktionsabhängigkeit von einer magnetischen Flussdichte und/oder einer Breite des Luftspalts (14) und/oder einer Drehzahl und/oder einer Drehposition des Rotors (20) gegenüber dem Stator (10) zeigt.

3. Verfahren nach Anspruch 1 oder 2, bei dem ein Imaginärteil (z') der ermittelten Impedanz (z) ermittelt wird, der eine magnetische Reluktanz eines durch die mindestens eine Messspule (35, 35') sowie Abschnitte des Stators (10) und des Rotors (20) führenden Magnetkreises widerspiegelt.

4. Verfahren nach einem der Ansprüche 1 bis 3, bei dem als mindestens eine Eigenschaft der elektrischen Maschine anhand des Imaginärteils der ermittelten Impedanz (z) und der induzierten Spannung eine Drehposition und/oder eine Drehzahl des Rotors (20) gegenüber dem Stator (10) und/oder ein Polradwinkel bestimmt werden.

5. Verfahren nach einem der Ansprüche 1 bis 4, bei dem zumindest die Messung der elektrischen Größen des Hochfrequenzsignals an der mindestens einen Messspule (35, 35') zum Ermitteln der Impedanz (z) der mindestens einen Messspule (35, 35') beim Stillstand des Rotors (20) gegenüber dem Stator (10) ermittelt werden.

6. Verfahren nach Anspruch 1 bis 5, bei dem die mindestens eine Eigenschaft der elektrischen Maschine für eine Mehrzahl von Drehposition des Rotors (20) gegenüber dem Stator (10) ermittelt wird.

7. Verfahren nach Anspruch 4 und 6, bei dem als mindestens eine Eigenschaft der elektrischen Maschine anhand des Imaginärteils der ermittelten Impedanz (z) eine Breite des Luftspalts (14) in Abhängigkeit der Drehposition des Rotors (20) bestimmt wird.

8. Verfahren nach Anspruch 7, bei dem ein Maß einer Exzentrizität des Rotors (20) aus der Drehpositions-abhängigen Breite des Luftspalts (14) bestimmt wird.

9. Verfahren nach einem der Ansprüche 1 bis 8, bei dem als mindestens eine Eigenschaft der elektrischen Maschine eine Magnetstärke von Rotormagneten (22), die in den Rotor (20) eingebettet sind, bestimmt wird.

10. Verfahren nach einem der Ansprüche 1 bis 8, bei dem als mindestens eine Eigenschaft der elektrischen Maschine ein Widerstand eines Käfigstabs des Rotors (20) bestimmt wird.

11. Verfahren nach einem der Ansprüche 1 bis 10, bei dem ein Realteil der ermittelten Impedanz (z) ermittelt wird, der einen elektrischen Widerstand der mindestens einen Messspule (35, 35') widerspiegelt.

12. Verfahren nach Anspruch 11, bei dem als mindestens eine Eigenschaft der elektrischen Maschine anhand des Realteils der ermittelten Impedanz (z) eine Temperatur der mindestens einen Messspule (35, 35') und damit des Stators (10) bestimmt wird.

13. Verfahren nach einem der Ansprüche 1 bis 12, bei dem zur Ermittlung der Impedanz das Signal der mindestens einen Messspule (35, 35') gefiltert wird, bevorzugt durch einen schmalbandigen Bandpassfilter oder einen Lock-in Verstärker, die auf die anregende Hochfrequenz abgestimmt sind.

14. Verfahren nach einem der Ansprüche 1 bis 13, bei dem die anregende Hochfrequenz so gewählt ist, dass sie sich von einem ganzzahligen Vielfachen einer Schaltfrequenz eines Umrichters unterscheidet, der mit der elektrischen Maschine gekoppelt ist.

15. Verfahren nach einem der Ansprüche 1 bis 14, bei dem die Messung der elektrischen Größen des Hochfrequenzsignals an einer Gruppe von Messspulen (35, 35') mit gleich- oder gegensinniger Verschaltung durchgeführt wird.

16. Verfahren nach einem der Ansprüche 1 bis 15, bei dem mindestens zwei Messspulen (35, 35') oder Messspulengruppen mit jeweils mindestens zwei Messspulen (35, 35') axial hintereinanderliegend in dem Luftspalt (14) angeordnet sind, wobei Impedanzen bzw. Induzierte Spannungen der mindestens zwei Messspulen (35, 35') oder Messspulengruppen ermittelt werden, um die bestimmte Eigenschaft der elektrischen Maschine an verschiedenen Position im Luftspalt (14) zu bestimmen.

17. Verfahren nach Anspruch 16, bei der die Impedanzen bzw. die induzierten Spannungen der mindestens zwei Messspulen (35, 35') oder Messspulengruppen mit Hilfe eines Multiplexers zeitlich nacheinander ermittelt werden.

18. Verfahren nach Anspruch 16 oder 17, angewendet bei der elektrischen Maschine, deren Rotor (20) eine Mehrzahl von gegeneinander verdrehten Segmenten aufweist, wobei die mindestens zwei Messspulen (35, 35') oder Messspulengruppen verschiedenen Segmenten zugeordnet sind.

19. Anordnung aus einer elektrischen Maschine mit einem Stator (10) und einem Rotor (20) sowie einem dazwischenliegenden Luftspalt (14), in dem eine Messspuleneinheit (30) angeordnet ist, die mindestens eine Messspule (35, 35') aufweist, und einer Auswerteeinheit zur Impedanzmessung und zur Induktionsmessung, die zur Durchführung eines Verfahrens gemäß der vorstehenden Ansprüche eingerichtet ist.

## Claims

1. Method for determining at least one property of an electrical machine having a stator (10) and a rotor (20) and an air gap (14) therebetween, in which a measuring coil unit (30) is arranged, which has at least one measuring coil (35, 35'), the method comprising the following steps:
- feeding a high-frequency signal into the at least one measuring coil (35, 35') with a frequency which lies outside a frequency spectrum which occurs in an induced signal of the at least one measuring coil (35, 35') during rotation of the electrical machine;
- measuring electrical variables of the high-frequency signal at the at least one measuring coil (35, 35');
- ascertaining an impedance (z) of the at least one measuring coil (35, 35') from the measured electrical variables;
- determining a voltage of the at least one measuring coil (35, 35') induced during rotation of the rotor (20) relative to the stator (10); and
- determining the at least one property of the electrical machine on the basis of the ascertained impedance (z) and the induced voltage, wherein both the impedance (z) and the induced voltage are functionally dependent on the at least one determined property.

2. Method according to claim 1, in which the at least one determined property shows a functional dependency on a magnetic flux density and/or a width of the air gap (14) and/or a rotational speed and/or a rotational position of the rotor (20) relative to the stator (10).

3. Method according to either claim 1 or claim 2, in which an imaginary part (z') of the ascertained impedance (z) is ascertained, which part reflects a magnetic reluctance of a magnetic circuit passing through the at least one measuring coil (35, 35') and portions of the stator (10) and the rotor (20).

4. Method according to any of claims 1 to 3, in which a rotational position and/or a rotational speed of the rotor (20) relative to the stator (10) and/or a rotor angle are determined as at least one property of the electrical machine on the basis of the imaginary part of the ascertained impedance (z) and the induced voltage.

5. Method according to any of claims 1 to 4, in which at least the measurement of the electrical variables of the high-frequency signal at the at least one measuring coil (35, 35') is ascertained, in order to ascertain the impedance (z) of the at least one measuring coil (35, 35') when the rotor (20) is at a standstill relative to the stator (10).

6. Method according to claims 1 to 5, in which the at least one property of the electrical machine is ascertained for a plurality of rotational positions of the rotor (20) relative to the stator (10).

7. Method according to claim 4 and claim 6, in which a width of the air gap (14) is determined as a function of the rotational position of the rotor (20) as at least one property of the electrical machine on the basis of the imaginary part of the ascertained impedance (z).

8. Method according to claim 7, in which a measure of an eccentricity of the rotor (20) is determined from the rotational position-dependent width of the air gap (14).

9. Method according to any of claims 1 to 8, in which a magnetic strength of rotor magnets (22) embedded in the rotor (20) is determined as at least one property of the electrical machine.

10. Method according to any of claims 1 to 8, in which a resistance of a cage bar of the rotor (20) is determined as at least one property of the electrical machine.

11. Method according to any of claims 1 to 10, in which a real part of the ascertained impedance (z) is ascertained, which reflects an electrical resistance of the at least one measuring coil (35, 35').

12. Method according to claim 11, in which a temperature of the at least one measuring coil (35, 35') and thus of the stator (10) is determined as at least one property of the electrical machine on the basis of the real part of the ascertained impedance (z).

13. Method according to any of claims 1 to 12, in which the signal of the at least one measuring coil (35, 35') is filtered to ascertain the impedance, preferably by means of a narrow-band band-pass filter or a lock-in amplifier, which are tuned to the exciting high frequency.

14. Method according to any of claims 1 to 13, in which the exciting high frequency is selected such that it differs from an integer multiple of a switching frequency of a converter coupled to the electrical machine.

15. Method according to any of claims 1 to 14, in which the measurement of the electrical variables of the high-frequency signal is carried out on a group of measuring coils (35, 35') connected in the same or opposite directions.

16. Method according to any of claims 1 to 15, in which at least two measuring coils (35, 35') or measuring coil groups having in each case at least two measuring coils (35, 35') are arranged axially one behind the other in the air gap (14), wherein impedances or induced voltages of the at least two measuring coils (35, 35') or measuring coil groups are ascertained in order to determine the specific property of the electrical machine at different positions in the air gap (14).

17. Method according to claim 16, in which the impedances or the induced voltages of the at least two measuring coils (35, 35') or measuring coil groups are ascertained one after the other by means of a multiplexer.

18. Method according to either claim 16 or claim 17, applied to the electrical machine, the rotor (20) of which has a plurality of segments which are rotated relative to one another, wherein the at least two measuring coils (35, 35') or measuring coil groups are assigned to different segments.

19. Arrangement consisting of an electrical machine having a stator (10) and a rotor (20) and an air gap (14) therebetween, in which a measuring coil unit (30) is arranged which has at least one measuring coil (35, 35'), and an evaluation unit for impedance measurement and for induction measurement, which is designed to carry out a method according to the preceding claims.

## Revendications

1. Procédé pour la détermination d'au moins une propriété d'une machine électrique comportant un stator (10) et un rotor (20) ainsi qu'un entrefer (14) situé entre eux, dans lequel est disposée une unité de bobines de mesure (30) qui présente au moins une bobine de mesure (35, 35'), comportant les étapes suivantes :
- injection d'un signal haute fréquence dans l'au moins une bobine de mesure (35, 35') à une fréquence qui se situe en dehors d'un spectre de fréquences qui apparaît dans un signal induit de l'au moins une bobine de mesure (35, 35') lorsque la machine électrique tourne ;
- mesure de grandeurs électriques du signal haute fréquence sur l'au moins une bobine de mesure (35, 35') ;
- définition d'une impédance (z) de l'au moins une bobine de mesure (35, 35') à partir des grandeurs électriques mesurées ;
- détermination d'une tension de l'au moins une bobine de mesure (35, 35'), laquelle tension est induite lors d'une rotation du rotor (20) par rapport au stator (10) ; et
- détermination de l'au moins une propriété de la machine électrique à l'aide de l'impédance (z) définie et de la tension induite, dans lequel l'impédance (z) et la tension induite présentent toutes deux une dépendance fonctionnelle vis-à-vis de l'au moins une propriété déterminée.

2. Procédé selon la revendication 1, dans lequel l'au moins une propriété déterminée affiche une dépendance fonctionnelle vis-à-vis d'une densité de flux magnétique et/ou d'une largeur de l'entrefer (14) et/ou d'une vitesse de rotation et/ou d'une position de rotation du rotor (20) par rapport au stator (10).

3. Procédé selon la revendication 1 ou 2, dans lequel on définit une partie imaginaire (z') de l'impédance (z) définie, laquelle partie imaginaire reflète une réluctance magnétique d'un circuit magnétique passant par l'au moins une bobine de mesure (35, 35') ainsi que par des sections du stator (10) et du rotor (20).

4. Procédé selon l'une des revendications 1 à 3, dans lequel on détermine comme au moins une propriété de la machine électrique, à l'aide de la partie imaginaire de l'impédance (z) définie et de la tension induite, une position de rotation et/ou une vitesse de rotation du rotor (20) par rapport au stator (10) et/ou un angle de roue polaire.

5. Procédé selon l'une des revendications 1 à 4, dans lequel on définit au moins la mesure des grandeurs électriques du signal haute fréquence sur l'au moins une bobine de mesure (35, 35') pour la définition de l'impédance (z) de l'au moins une bobine de mesure (35, 35') lorsque le rotor (20) est à l'arrêt par rapport au stator (10).

6. Procédé selon les revendications 1 à 5, dans lequel l'au moins une propriété de la machine électrique est définie pour une pluralité de positions de rotation du rotor (20) par rapport au stator (10).

7. Procédé selon les revendications 4 et 6, dans lequel on détermine comme au moins une propriété de la machine électrique, à l'aide de la partie imaginaire de l'impédance (z) définie, une largeur de l'entrefer (14) dépendant de la position de rotation du rotor (20).

8. Procédé selon la revendication 7, dans lequel une mesure d'une excentricité du rotor (20) est déterminée à partir de la largeur de l'entrefer (14) dépendant de la position de rotation.

9. Procédé selon l'une des revendications 1 à 8, dans lequel on détermine comme au moins une propriété de la machine électrique une intensité magnétique d'aimants de rotor (22) qui sont incorporés dans le rotor (20).

10. Procédé selon l'une des revendications 1 à 8, dans lequel on détermine comme au moins une propriété de la machine électrique une résistance d'une barre de cage du rotor (20).

11. Procédé selon l'une des revendications 1 à 10, dans lequel on définit une partie réelle de l'impédance (z) définie, laquelle partie réelle reflète une résistance électrique de l'au moins une bobine de mesure (35, 35').

12. Procédé selon la revendication 11, dans lequel on détermine comme au moins une propriété de la machine électrique, à l'aide de la partie réelle de l'impédance (z) définie, une température de l'au moins une bobine de mesure (35, 35') et donc du stator (10).

13. Procédé selon l'une des revendications 1 à 12, dans lequel, pour la définition de l'impédance, le signal de l'au moins une bobine de mesure (35, 35') est filtré, de préférence par un filtre passe-bande à bande étroite ou par un amplificateur synchrone, lesquels sont accordés sur la haute fréquence d'excitation.

14. Procédé selon l'une des revendications 1 à 13, dans lequel la haute fréquence d'excitation est choisie de manière à être différente d'un multiple entier d'une fréquence de commutation d'un convertisseur qui est couplé à la machine électrique.

15. Procédé selon l'une des revendications 1 à 14, dans lequel la mesure des grandeurs électriques du signal haute fréquence est effectuée sur un groupe de bobines de mesure (35, 35') comportant un câblage de même sens ou de sens contraire.

16. Procédé selon l'une des revendications 1 à 15, dans lequel au moins deux bobines de mesure (35, 35') ou groupes de bobines de mesure comportant respectivement au moins deux bobines de mesure (35, 35') sont disposés axialement l'un derrière l'autre dans l'entrefer (14), dans lequel des impédances ou des tensions induites des au moins deux bobines de mesure (35, 35') ou groupes de bobines de mesure sont définies afin de déterminer la propriété déterminée de la machine électrique à différentes positions dans l'entrefer (14).

17. Procédé selon la revendication 16, dans lequel les impédances ou les tensions induites des au moins deux bobines de mesure (35, 35') ou groupes de bobines de mesure sont définies successivement dans le temps à l'aide d'un multiplexeur.

18. Procédé selon la revendication 16 ou 17, appliqué à la machine électrique dont le rotor (20) présente une pluralité de segments tournés les uns par rapport aux autres, dans lequel les au moins deux bobines de mesure (35, 35') ou groupes de bobines de mesure sont associés à différents segments.

19. Agencement constitué d'une machine électrique comportant un stator (10) et un rotor (20) ainsi qu'un entrefer (14) situé entre eux, dans lequel est disposée une unité de bobines de mesure (30) qui présente au moins une bobine de mesure (35, 35'), et une unité d'évaluation pour la mesure d'impédance et pour la mesure d'induction, laquelle unité d'évaluation est configurée pour la mise en oeuvre d'un procédé selon les revendications précédentes.
